# EUROPÄISCHE PATENTANMELDUNG

(11) **EP 3 640 372 A1**
(43) Veröffentlichungstag der Anmeldung: **22.04.2020**
(21) Anmeldenummer: 18201350.8
(22) Anmeldetag: 18.10.2018
(51) Int. Cl.: C25F 3/04, C25F 3/08

(54) **VERFAHREN ZUM ENTFERNEN VON METALLISCHEN STÜTZSTRUKTUREN AN EINEM ADDITIV GEFERTIGTEN METALLBAUTEIL**

(71) Anmelder: Hirtenberger Engineered Surfaces GmbH, 2552 Hirtenberg (AT)
(72) Erfinder: Hansal, Selma, 2753 Markt Piesting (AT); Hansal, Wolfgang, 2753 Markt Piesting (AT); Sandulache, Gabriela, 2560 Berndorf (AT)
(74) Vertreter: Schwarz & Partner Patentanwälte OG

(57) **Zusammenfassung**

Verfahren zum Entfernen von metallischen Stützstrukturen, Sinterkuchen und/oder Ableitfahnen an einem additiv gefertigten Metallbauteil, wobei das Metallbauteil elektrolytisch in einem sauren Elektrolyten behandelt wird, wobei das Metallbauteil über einen definierten Zeitraum als Anode betrieben wird, wobei über den definierten Zeitraum an das Metallbauteil mehrfach abwechselnd eine höhere Spannung und anschließend eine geringere Spannung oder eine höhere Stromdichte und anschließend eine geringere Stromdichte angelegt wird.

## Beschreibung

Die vorliegende Erfindung betrifft ein Verfahren zum Entfernen von metallischen Stützstrukturen, Sinterkuchen und/oder Ableitfahnen an einem additiv gefertigten Metallbauteil, wobei das Metallbauteil elektrolytisch in einem sauren Elektrolyten behandelt wird, wobei das Metallbauteil über einen definierten Zeitraum als Anode betrieben wird. Weiters betrifft die Erfindung eine elektrolytische Zelle, umfassend einen sauren Elektrolyten.

### Hintergrund der Erfindung

Bei additiven Fertigungsverfahren zur Herstellung von Metallbauteilen wie das selektive Lasersintern, das selektive Laserschmelzen oder das selektive Elektronenstrahlschmelzen werden Metallpulverschichten selektiv mittels der Energie eines Lasers oder Elektronenstrahls verfestigt. Mit solchen Fertigungsverfahren können grundsätzlich komplexe Metallbauteile gefertigt werden, wobei je nach geometrischer Form Stützstrukturen erforderlich sind, die zurückbleiben. Abhängig von den Fertigungsbedingungen kann auch ein Sinterkuchen am Metallbauteil zurückbleiben. Gelegentlich wird das rohe Metallbauteil während der additiven Fertigung zur Vermeidung von hohen Temperaturgradienten während der Fertigung mit Ableitfahnen zur Ableitung von Wärme in entsprechenden Bauteilregionen ausgestattet.

Diese im fertigen Bauteil unerwünschten Stützstrukturen und Rückstände müssen nach Fertigung des Metallbauteils aufwändig entfernt werden, wobei neben mechanischen Verfahren wie Fräsen, Gleitschleifen und der Einsatz von Strahlmittel insbesondere für komplexe Metallbauteile elektrochemische Verfahren wie Elektropolierverfahren eingesetzt werden.

GB 2 543 058 A1 beschreibt ein elektrochemisches Verfahren zum Glätten eines Metallbauteils, welches additiv gefertigt wurde, wobei sehr hohe elektrische Spannungen eingesetzt und unterschiedliche Elektrolyten aus anorganischen Salzen, anorganischen Säuren oder anorganischen Basen bis zu 25 Gew.% zugesetzt werden.

Die Selektivität des in GB 2 543 058 beschriebenen Verfahrens ist allerdings gering. Unebenheiten am Metallbauteil werden zwar ausreichend geglättet, allerdings gestaltet sich die Kontrollierbarkeit des Materialabtrags als schwierig.

### Kurzbeschreibung der Erfindung

Aufgabe der vorliegenden Erfindung ist es daher, ein Verfahren der eingangs beschriebenen Gattung bereitzustellen, mit welchem selektiv Stützstrukturen, Sinterkuchen oder Ableitfahnen am additiv gefertigten Metallbauteil entfernt werden können.

Gelöst wird diese Aufgabe durch ein Verfahren zum Entfernen von metallischen Stützstrukturen, Sinterkuchen und/oder Ableitfahnen an einem additiv gefertigten Metallbauteil, wobei das Metallbauteil elektrolytisch in einem sauren Elektrolyten behandelt wird, wobei an das Metallbauteil über einen definierten Zeitraum als Anode betrieben wird, dadurch gekennzeichnet, dass über den definierten Zeitraum an das Metallbauteil mehrfach abwechselnd eine höhere Spannung und anschließend eine geringere Spannung oder eine höhere Stromdichte und anschließend eine geringere Stromdichte angelegt werden.

Es hat sich überraschenderweise herausgestellt, dass sich durch das abwechselnde Anlegen von höheren und niedrigeren Spannungen bzw. Stromdichten störende Strukturen wie der Sinterkuchen, die Stützstrukturen oder Ableitfahnen am Metallbauteil kontrollierter entfernen lassen, sodass das eigentliche Metallbauteil selbst weniger angegriffen wird.

Bevorzugt beträgt der gesamte Zeitraum der Behandlung zwischen 10 und 120, vorzugweise 20 und 70 Minuten besonders bevorzugt 30 bis 60 Minuten.

Überraschenderweise hat sich herausgestellt, dass das Anlegen der höheren Spannung für einen kurzen Zeitraum ausreicht. Konkret hat sich erwiesen, dass der Zeitraum von nicht mehr als 20 s, vorzugsweise nicht mehr als 5 s, ausreicht.

Noch überraschender war, dass das Anlegen unterschiedlicher Stromstärken für noch kürzere Zeiträume ausreicht. Zeiträume von unter 1 s können hier bereits ausreichen.

Mit dem gegenständlichen Verfahren können sowohl die höhere als auch die geringere Spannung Stromstärke deutlich niedriger gehalten werden, als in GB 2 543 058 A1. Die geringere Spannung kann zum Beispiel nicht mehr als 30 V, vorzugsweise nicht mehr als 10 V betragen. Die höhere Spannung kann z.B. nicht mehr als 60 V, vorzugsweise nicht mehr als 40 V betragen.

Der Elektrolyt muss sauer ausgebildet sein. Besonders gute Ergebnisse wurden erzielt, wenn der saure Elektrolyt wenigstens ein Halogenid, insbesondere Chlorid oder Fluorid enthält. Chlorid eignet sich besonders bei Metallbauteilen aus Eisen(legierungen), während Fluorid bei allen Metallbauteilen gute Ergebnisse zeigt. Bevorzugt wird dieser in Form von gelöstem HF₂⁻ vorzugsweise NH₄HF₂ zugesetzt. Bevorzugt wird HF₂⁻ in den Elektrolyten in einer Menge zwischen 0,5 und 1 mol/l, vorzugsweise 0,6 bis 1,8 mol/l zugesetzt. Die Konzentration an F⁻ beträgt folglich vorzugweise zwischen 1 und 2 mol/l, vorzugsweise 1,2 bis 1,6 mol/l.

Auch ist es vorteilhaft, wenn der saure Elektrolyt ein Sulfat oder Sulfonat enthält. Das Sulfat kann z.B. in Form von Schwefelsäure oder einem Salz davon zugesetzt sein. Als Sulfonat kommt z.B. Methylsulfonsäure oder ein Salz davon in Frage.

Bevorzugt enthält der Elektrolyt eine starke Säure. Bevorzugte Beispiele sind Schwefelsäure oder Salpetersäure.

Bevorzugt enthält der Elektrolyt mindestens 30 Vol.% an Säure.

Als besonders geeignet hat sich das Verfahren bei Metallbauteilen und metallischen Stützstrukturen aus Titan oder einer Titanlegierung erwiesen. Ein Beispiel einer geeigneten Legierung wäre TiAl6V4. Andere ebenfalls geeignete Metalle umfassen Aluminiumlegierungen, Nickelbasislegierungen (vorzugsweise Inconel) oder Eisenlegierungen. Unter

Ohnehin ist bevorzugt vorgesehen, dass Sinterkuchen, Stützstrukturen und Metallbauteil aus demselben Metall bestehen.

Anhand von Beispielen und Vergleichsbeispielen wird die Erfindung näher erläutert.
Für alle Beispiele gilt, dass nach der Behandlung die Stützstruktur, der Sinterkuchen oder die Ableitfahnen zur Gänze entfernt wurden, während die Geometrie des Metallbauteils selbst vollständig erhalten blieb.

### Beispiel 1:

### Entfernen von Stützstrukturen von einem Metallbauteil aus einer Titanlegierung TiAl6V4 (LPBF)

Ein Metallbauteil aus der Legierung TiAl6V4 (LPBF) wurde nach additiver Fertigung in einen Elektrolyten gegeben und als Anode betrieben. Als Elektrolyt wurde verwendet:
60 Vol% Wasser
40 Vol% H₂SO₄
33,3 g/l NH₄HF₂

Über einen Zeitraum von 30 min wurde bei Raumtemperatur die Spannung an der Anode wie folgt verändert:
1 s bei 5 V
1 s bei 25 V
alternierend.

### Beispiel 2:

### Entfernen von Stützstrukturen von einem Metallbauteil aus einer Titanlegierung TiAl6V4 (EBM)

Ein Metallbauteil aus der Legierung TiAl6V4 (EBM) wurde nach additiver Fertigung in einen Elektrolyten gegeben und als Anode betrieben. Als Elektrolyt wurde verwendet:
60 Vol% Wasser
40 Vol% H₂SO₄
33,3 g/l NH₄HF₂

Schritt 1: Das Metallbauteil wurde für 30 Minuten bei 5 V elektrolysiert.
Schritt 2: Über einen Zeitraum von 5 min wurde bei Raumtemperatur die Spannung am Metallbauteil wie folgt verändert:
   4 s bei 5 V
   1 s bei 35 V
   alternierend.

### Beispiel 3:

### Entfernen von Stützstrukturen von einem Metallbauteil aus einer Titanlegierung TiAl6V4 (LPBF)

Ein Metallbauteil aus der Legierung TiAl6V4 (LPBF) wurde nach additiver Fertigung in einen Elektrolyten gegeben und als Anode betrieben. Als Elektrolyt wurde verwendet:
60 Vol% Wasser
40 Vol% H₂SO₄
33,3 g/l NH₄HF₂

Schritt 1: Das Metallbauteil wurde für 30 Minuten bei 5 V elektrolysiert.
Schritt 2: Über einen Zeitraum von 5 min wurde bei Raumtemperatur die Spannung am Metallbauteil wie folgt verändert:
   4 s bei 5 V
   1 s bei 35 V
   alternierend.

### Beispiel 4:

### Entfernen des Sinterkuchens und der Stützstrukturen von einem Metallbauteil aus einer Titanlegierung TiAl6V4 (EBM)

Ein Metallbauteil aus der Legierung TiAl6V4 (EBM) wurde nach additiver Fertigung in einen Elektrolyten gegeben und als Anode betrieben. Als Elektrolyt wurde verwendet:
60 Vol% Wasser
40 Vol% H₂SO₄
33,3 g/l NH₄HF₂
Über einen Zeitraum von 30 min wurde bei Raumtemperatur die Spannung an der Anode wie folgt verändert:
4 s bei 5 V
1 s bei 25 V
alternierend.

### Beispiel 5:

### Entfernen des Sinterkuchens und der Stützstrukturen von einem Metallbauteil aus einer Titanlegierung TiAl6V4 (LPBF)

Ein Metallbauteil aus der Legierung TiAl6V4 (LPBF) wurde nach additiver Fertigung in einen Elektrolyten gegeben und als Anode betrieben. Als Elektrolyt wurde verwendet:
60 Vol% Wasser
40 Vol% H₂SO₄
33,3 g/l NH₄HF₂

Über einen Zeitraum von 60 Minuten wurde bei Raumtemperatur die Spannung an der Anode wie folgt verändert:
4 s bei 5 V
1 s bei 25 V
alternierend.

### Beispiel 6:

### Entfernen des Sinterkuchens von einem Metallbauteil aus einer Titanlegierung TiAl6V4 (EBM)

Ein Metallbauteil aus der Legierung TiAl6V4 (EBM) wurde das Metallbauteil nach additiver Fertigung in einer Lösung stromlos bei Raumtemperatur für 20 Minuten vorbehandelt. Die Lösung enthielt folgende Bestandteile.
20 Vol% HNO₃
5 Vol% Flusssäure

Schritt 2: Das vorbehandelte Metallbauteil wurde in einem Elektrolyten der Zusammensetzung
   60 Vol% Wasser
   40 Vol% H₂SO₄
   50 g/l NH₄HF₂
   elektrolytisch für 20 Minuten bei Raumtemperatur bei
   4 s bei 5 V
   1 s bei 25 V
   alternierend elektrolysiert.

### Beispiel 7:

### Entfernen anhaftende Pulverrückstände von einem Metallbauteil aus einer Aluminiumlegierung AlSi10Mg (LPBF)

Ein Metallbauteil aus der Legierung AlSi10 Mg (LPBF) wurde nach additiver Fertigung in einen Elektrolyten gegeben und als Anode betrieben. Als Elektrolyt wurde verwendet:
50 Vol% Methansulfonsäure
50 Vol% Ethylenglykol
27 g/l NH₄HF₂

Für 30 Minuten wurde bei 65 °C die Stromdichte an der Anode wie folgt verändert:
10 ms bei 3 A/dm²
10 ms bei 9 A/dm²

### Beispiel 8: Entfernen anhaftende Pulverrückstände von einem Metallbauteil aus einer Aluminiumlegierung AlSi10Mg (LPBF)

Ein Metallbauteil aus der Legierung AlSi10 Mg (LPBF) wurde nach additiver Fertigung in einen Elektrolyten gegeben und als Anode betrieben. Als Elektrolyt wurde verwendet:
50 Vol% Methansulfonsäure
50 Vol% 1,2-Propandiol
27 g/l NH₄HF₂

Für 30 Minuten wurde bei 65 °C die Stromdichte an der Anode wie folgt verändert:
10 ms bei 3 A/dm²
10 ms bei 9 A/dm²

### Beispiel 9: Entfernen von Stützstrukturen von einem Metallbauteil aus einer Nickelbasislegierung Inconel 718 ® (LPBF)

Ein Metallbauteil aus der Nickelbasislegierung Inconel 718 ® (LPBF) wurde nach additiver Fertigung in einen Elektrolyten gegeben und als Anode betrieben. Als Elektrolyt wurde verwendet:
50 Vol% Wasser
12.5 Vol% HNO₃ 53 %
37.5 Vol% HCl 32 %

Für 7 Minuten wurde das Potential an der Anode wie folgt verändert:
1000 ms bei 20 V
4000 ms bei 3 V

### Beispiel 10: Entfernen von Stützstrukturen von einem Metallbauteil aus Edelstahl 316L (LPBF)

Ein Metallbauteil aus Edelstahl 316L (LPBF) wurde nach additiver Fertigung in einen Elektrolyten gegeben und als Anode betrieben. Als Elektrolyt wurde verwendet:
50 Vol% Wasser
12.5 Vol% HNO₃ 53 %
37.5 Vol% HCl 32 %

Für 7 Minuten wurde das Potential an der Anode wie folgt verändert:
1000 ms bei 20 V
4000 ms bei 3 V

### Beispiel 11: Entfernen von Stützstrukturen von einem Metallbauteil aus der Aluminiumlegierung AlSi10Mg (LPBF)

Ein Metallbauteil aus der Aluminiumlegierung AlSi10Mg (LPBF) wurde nach additiver Fertigung in einen Elektrolyten gegeben und als Anode betrieben. Als Elektrolyt wurde verwendet:
60 Vol% Wasser
40 Vol% H₂SO₄
50 g/l NH₄HF₂

Für 10 Minuten wurde das Potential an der Anode wie folgt verändert:
1000 ms bei 20 V
4000 ms bei 3 V

Anmerkung:
LPBF: Metallbauteil hergestellt durch "laser powder bed fusion"
EBM: Metallbauteil hergestellt duch "electron beam melting" (Elektronen-Strahlschmelzen)

## Patentansprüche

1. Verfahren zum Entfernen von metallischen Stützstrukturen, Sinterkuchen und/oder Ableitfahnen an einem additiv gefertigten Metallbauteil, wobei das Metallbauteil elektrolytisch in einem sauren Elektrolyten behandelt wird, wobei das Metallbauteil über einen definierten Zeitraum als Anode betrieben wird, **dadurch gekennzeichnet, dass** über den definierten Zeitraum an das Metallbauteil mehrfach abwechselnd eine höhere Spannung und anschließend eine geringere Spannung oder eine höhere Stromdichte und anschließend eine geringere Stromdichte angelegt wird.

2. Verfahren nach Anspruch 1, **dadurch gekennzeichnet, dass** der gesamte Zeitraum 5 bis 120 Minuten, vorzugsweise 20 bis 70 Minuten beträgt.

3. Verfahren nach Anspruch 1 oder Anspruch 2, **dadurch gekennzeichnet, dass** die höhere Spannung oder Stromdichte über einen Zeitraum von nicht mehr als 30 s, vorzugsweise nicht mehr als 5 s angelegt wird.

4. Verfahren nach einem der Ansprüche 1 bis 3, **dadurch gekennzeichnet, dass** die geringere Spannung nicht mehr als 30 V, vorzugsweise nicht mehr als 10 V bzw. die geringere Stromdichte 7 A/dm², vorzugsweise nicht mehr als 4 A/dm² beträgt.

5. Verfahren nach einem der Ansprüche 1 bis 4, **dadurch gekennzeichnet, dass** die höhere Spannung nicht mehr als 60 V, vorzugsweise nicht mehr als 40 V bzw. die höhere Stromdichte 15 A/dm², vorzugsweise nicht mehr als 10 A/dm² beträgt.

6. Verfahren nach einem der Ansprüche 1 bis 5, **dadurch gekennzeichnet, dass** der saure Elektrolyt Cl⁻ und/oder F⁻, im Fall von F⁻ vorzugsweise in Form von gelöstem NH₄HF₂ enthält.

7. Verfahren nach einem der Ansprüche 1 bis 6, **dadurch gekennzeichnet, dass** der saure Elektrolyt ein Sulfat oder Sulfonat enthält.

8. Verfahren nach einem der Ansprüche 1 bis 7, **dadurch gekennzeichnet, dass** das Metallbauteil und die metallische Stützstrukturen, der Sinterkuchen oder die Ableitfahne aus Titan oder einer Titanlegierung, einer Aluminiumlegierung, einer Nickelbasislegierung oder einer Eisenlegierung bestehen.

9. Elektrolytische Zelle, umfassend einen sauren Elektrolyten, in welchem sich ein additiv gefertigtes Metallbauteil mit metallischen Stützstrukturen, einem Sinterkuchen und/oder Ableitfahnen befindet, welches die Anode bildet, wobei eine Regeleinrichtung vorgesehen ist, mit welcher über einen definierten Zeitraum an der Anode mehrfach abwechselnd eine höhere Spannung und anschließend eine geringere Spannung oder eine höhere Stromdichte und anschließend eine geringere Stromdichte angelegt wird.
